## Europäisches Patentamt

## European Patent Office

## Office européen des brevets

(19)

(11) Publication number: **0 080 354**
**A2**

(12) # EUROPEAN PATENT APPLICATION

(21) Application number: **82306195.7**

(22) Date of filing: **22.11.82**

(51) Int. Cl.³: **G 06 F 11/10**

(30) Priority: **23.11.81 US 324290**

(43) Date of publication of application: **01.06.83**
**Bulletin 83/22**

(84) Designated Contracting States: **DE FR GB IT**

(71) Applicant: **SPERRY CORPORATION, 1290, Avenue of the Americas, New York, N.Y. 10019 (US)**

(72) Inventor: **Burns, Gary David, 6829, Idsen Avenue South, Cottage Grove Minnesota 55016 (US)**
Inventor: **Price, Ferris Thomas, 2019-21st Avenue South Apt. N-5, Minneapolis Minnesota 55404 (US)**

(74) Representative: **Michaels, Peter Albert, Sperry Univac Patent & Licensing Services M.S. S2W1 Sperry Rand Ltd. Sperry Univac Centre Brentfields, London NW10 8LS (GB)**

(54) **Computer memory checking system.**

(57) A computer memory checking system includes error detecting and correcting means which generate check digits stored with the words and which on read-out generate check digits from the word and compare them with the stored check digits. In the invention, the word, including both data and check digits, is partitioned, and the portions are stored in separately-addressed random access memories (22, 24, 26).

If a memory driver should fail, it will result in one of the random access memories being incorrectly addressed and delivering the wrong word portion. The error correcting circuits (54) will thereupon, in general, detect an uncorrectable multi-bit error.

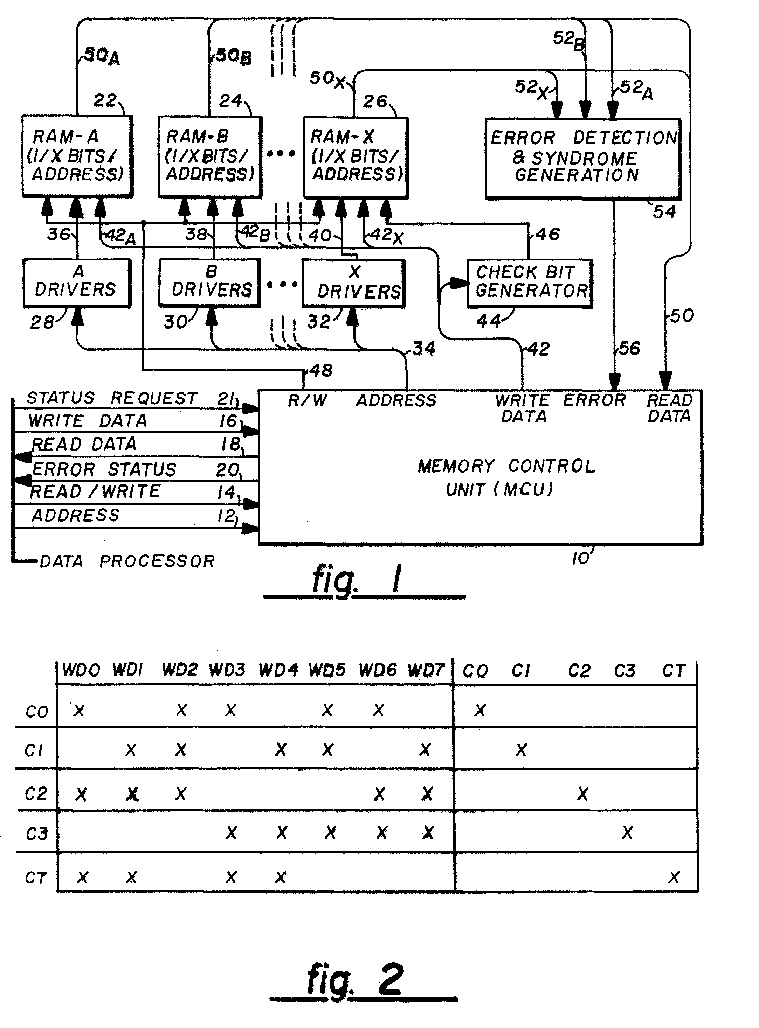

Means (not shown in Figure 1) are provided for storing syndrome bits indicative of the error, and for storing the address at which an error has occurred, and from these the failing drivers can be identified.

## Computer Memory Checking System

The present invention relates to computer memory checking systems and in particular to a system which will detect errors due to malfunctions of the memory driver circuits.

Testing of memory driver operation is normally done during a diagnostic routine in which a pattern of test words are recorded in the memory and are subsequently read out and checked. Such routines, however, are used for testing purposes, and do not provide any kind of monitoring or checking during normal operation. If a memory address driver were to fail during operation, or were to be subject to an intermittent fault, incorrect data would be read from the memory.

It is the object of the present invention to provide a computer memory checking system which will detect the failure of a memory address driver.

Error-correcting systems are known in which the data bits of a word are stored together with a number of check bits so computed that parity checks over selected combinations of check bits and data bits are satisfied. When a word is read out of store the check bits are re-computed from data bits and compared with the check bits originally stored. If the check bits are identical, the word may be taken to be free from error. If the check bits are not identical, the pattern of discrepancies will indicate the nature oᴛ the ＿ or. In the case of a single bit error the error may be corrected, and in the case of a multiple bit error the check will show that such an error has occurred, but with the codes commonly in use such an error cannot be corrected. Such codes were first proposed in an article entitled "Error Detecting and Correcting Codes" by R.W. Hamming in Bell System Technical Journal, Vol 29, pages 147 to 160 (April 1950), and an example of a system using such a code is given in our own U.S. patent specification 3 999 051.

-2-

Error detecting and correcting codes of this kind do not detect memory address driver failures, because although the failure may cause the word to be stored at, or read from, the wrong memory location, the word will be stored or retrieved intact, so that the various parity checks will still be satisfied.

The basic idea of the present invention is that the word, together with its check digits, is partitioned, and the portions are stored in a number of separate random access memories, to each of which the memory address is presented. If the memory address driver should fail, a portion of the word will be retrieved from an incorrect location, and the various parity checks will indicate that an uncorrectable multiple bit error has occurred. By storing the syndrome digits representing the failed parity checks, and the addresses of the locations at which multiple bit errors have occurred, a pattern will be obtained indicating which of the memory address drivers has failed.

The invention will be further described by way of example, with reference to the accompanying drawings, in which

Figure 1 is a block diagram of the memory addressing system of the present invention.

Figure 2 illustrates one type of check bit generation system wherein, by way of example, an 8-bit data word is utilised in conjunction with five check bits.

Figures 3a and 3b, when arranged as shown in Figure 3, comprise a logic block diagram of a system according to the invention.

Figures 4a through Figure 4c, when arranged as shown in Figure 4, form a logic block diagram of a system simplified for purposes of explanation.

-3-

Figure 5 is a syndrome map, and illustrates the identification of detected memory malfunction during reading.

Figure 6 is a flow diagram illustrating the operation of the invention.

Figure 1 is a block diagram of the memory system of the present invention. The invention forms part of a digital data processing system having a data processing unit (not shown) for performing programmed manipulation of data words. A data processing system of this type requires the facility for storing data words and instruction words, and accessing data words and instruction words thus stored. In such systems it is common to provide a memory control unit 10, hereinafter referred to as MCU, for interfacing between the data processing unit and the memory devices. The MCU provides control and timing for the exchanges of data and instruction words between the data processing unit(s) and the memory devices. In order to access memory an address is provided on line 12 together with a signal on line 14 indicating whether the operation is to be a read or a write. For a write function the write data are provided on line 16, which will comprise the number of conductors corresponding to a full data word for parallel transmission, or to some segment of a full data word if data is to be transmitted in less than full word portions and assembled by the MCU for a full data word write. When data is read from a memory device, the MCU provides the data on line 18 to the data processor. Many systems involve error detection circuitry associated with the MCU for evaluating read data and providing signals on line 20 to the data processor indicative that error conditions have been found to exist. A status request on line 21 will cause the MCU to provide error history signals on line 18 for storage and evaluation. The error history can include the address of read data found in error, an indication of the number of error bits, and an indication of whether the detected error was corrected or not.

In the embodiment shown, the memory device comprises a plurality of random access memories, comprising RAM semiconductor memories, and hereinafter referred to as RAM. RAM A 22, RAM B 24, and RAM X 26, each store predetermined portions of the write data, for example 1/X bits of addressable bit configuration accessible by a single memory addressing sequence. The RAM devices are well-known and available commercially, and their operation will not be described in detail.

Each RAM has associated therewith a set of memory drivers capable of accessing the addressable locations therein. The A drivers 28 are associated with RAM A, the B drivers 30 are associated with RAM B, and the X drivers 32 are associated with RAM X. In the configuration shown, it is clear that additional RAM devices with associated drivers can be utilised to break the number of bits to be recorded for each addressable location into smaller portions. This selection will be a matter of design that will accommodate the number of addressable bits per location in each RAM device, the number of bits in the data words, and the number of check bits utilised for error correction and detection for the system.

The MCU will translate the address bits received on line 12 and provide addressing signals in parallel to the memory drivers 28, 30 and 32 on line 34. It can be seen, then that each set of drivers receives an identical address bit configuration. The A drivers provide the drive signals on lines 36 to RAM A, the B drivers provide the drive signals to RAM B on lines 38, and the X drivers provide the drive signals to RAM X on lines 40. If a larger number of RAM devices were to be utilised, a correspondingly arranged additional set of memory drivers would be required with a similar drive relationship.

In a writing operation the write data will be provided on cable 42 to the check bit generator 44. The check bit generator, which will be described in more detail below, provides a set of check bits dependent upon the write data bits which are recorded with the write data. These check bits are used for checking data as it is read out to determine that the data thus read are accurate, and that errors have not occurred as a result of the recording and read out operations. Errors can occur from various causes, one of which involves failures of the memory driver circuits.

Figure 2 illustrates one type of check bit generation system wherein an 8-bit data word, whose individual bits are labelled WD 0 through WD 7, is evaluated for generating check bits C0, C1, C2, C3, CT. The check bits can be viewed as a plurality of parity bits for individual bit configurations within the write data. For example, check bit C0 will be a "1" when the data bits WD 0, WD 2, WD 3, WD 5 and WD 6 add up to an odd number, thereby effectively bring an even parity for the designated bits. Similarly, C1 will be a "1" when WD 1, WD 2, WD 4, WD 5, and WD 7 add up to an odd count. The other check bits C2, C3 and CT are similarly determined.

Referring again to Figure 1, it will be seen that once the check bits are generated, they are combined with the write data bits and the entire bit configuration is partitioned for recording. In this particular embodiment, the check bits all occur in one portion, and are shown directed on line 46 to RAM X. The write data bits are partitioned, and a first portion is directed on line 42a to RAM A, a second portion is directed on line 42b to RAM B, and the remainder of the data bits are directed on line 42x to RAM X, the combination of the data bits on line 42x and the check bits on line 46 comprising the portion 1/X of the entire bit configuration to be recorded.

The MCU provides a signal on the R/W line 48 which is directed to all RAM devices, and makes the selection between the read and the write operations.

When the system has data recorded and available for accessing, the occurrence of a read request on line 14 will result in a read signal on line 48, and the address received on line 12 will be translated and directed to the memory drivers on line 34. The read data are directed on line 50 from all RAM devices and are available for transmission on line 18 to the data processing system. The read data are assembled in segments from the various RAM devices, with RAM A providing its portion on line 50a, RAM B providing its portion on line 50b, and RAM X providing its portion on line 50x. All the data bits including the check bits are directed on lines 52a, 52b, and 52x from the RAM devices to the error detection syndrome generator 54. As will be described in more detail below, this evaluates the read data bits and regenerates the check bits in the manner previously described with reference to Figure 2. The regenerated check bits are compared with the check bits read from the RAM devices. If they are identical, this indicates that no error exists. If there is any discrepancy between the stored and the regenerated check bits, an error signal is generated on line 56 to the MCU which indicates that the read data are in error, causes correction of the data if possible, indicates whether one or more bits were in error, and causes the address to be captured. Other manipulation of read data bits that are found to be in error may occur, but for purposes of this invention it is sufficient to indicate that the error words are detected, identified, and an indication given to the data processor that the error occurred. The data processor can then decide when to issue a status request for logging the error address and the error indicating signals. It can also determine whether or not to use the read data.

Since the data words, including the check bits, are broken into segments for recording, it can be seen that during read out the failure of a memory driver circuit for any of the RAM devices will result in access to an incorrect memory location in the associated RAM device. Upon read out, the address improperly accessed will result in a bit configuration output on its associated output line that, when in combination with the portions read from the other RAM devices, will have a very high probability of producing an incorrect generated check bit configuration. When this incorrect check bit configuration is compared to the check bits that were recorded, and the error condition is detected, the syndrome bits will provide error signals on line 56 that will be available for recording and establishing a record of error conditions. This record of error conditions, along with the captured address, will be made available by circuitry (not shown) for evaluation, and will provide a pattern of recurring errors that will determine which of the memory driver circuits failed. The error signal evaluation and memory driver failure location may either be implemented with hardware that will provide output signals indicative of the evaluation, or by an evaluation program to be operated by the data processor, or it could simply be a visual output in a register that can be viewed by an operator, and the evaluation of memory driver failure location be made outside the data processing system.

In the system illustrated a single bit error is detected and corrected. This results in good read data being transferred on line 18. A single bit error signal advises the data processor that the error occurred, but that the data is good. The status request causes the captured address and the syndrome bits to be transferred and recorded. Multiple errors are not correctable, and the processor is advised that the read data are in error, and not corrected. Again the status request causes logging of the captured address and the syndrome bits.

While the partitioning of the data bits and the check bits for recording has been shown to be made in equal portions, it is clear that the equal division is not essential, and that the portions could be of different sizes.

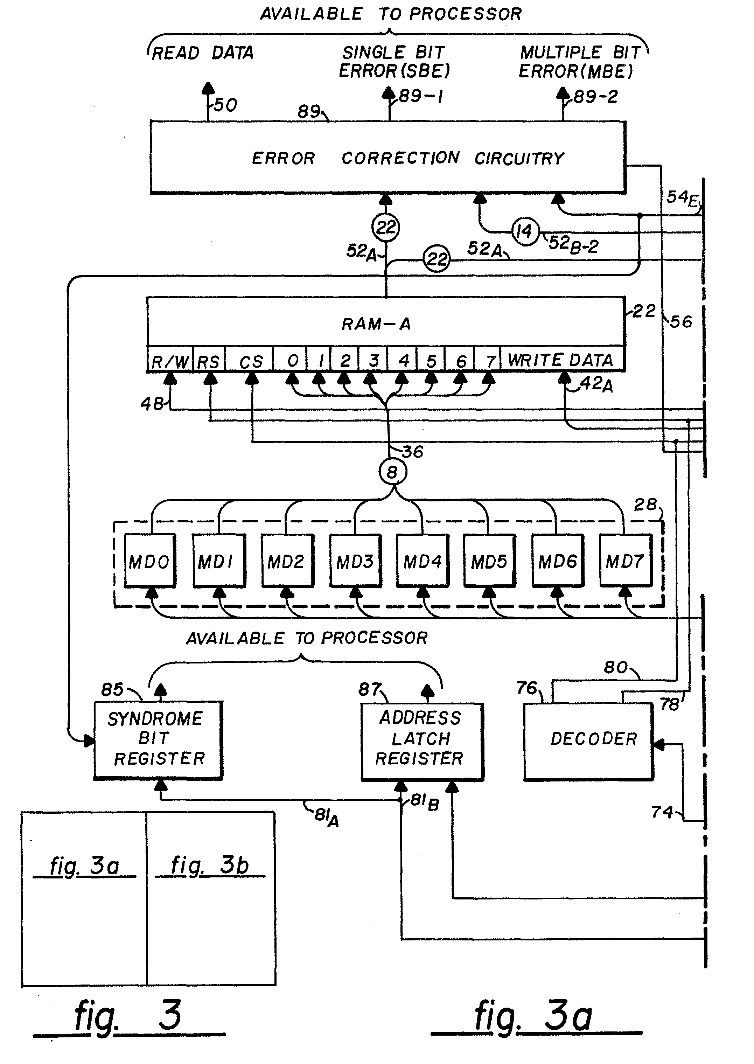

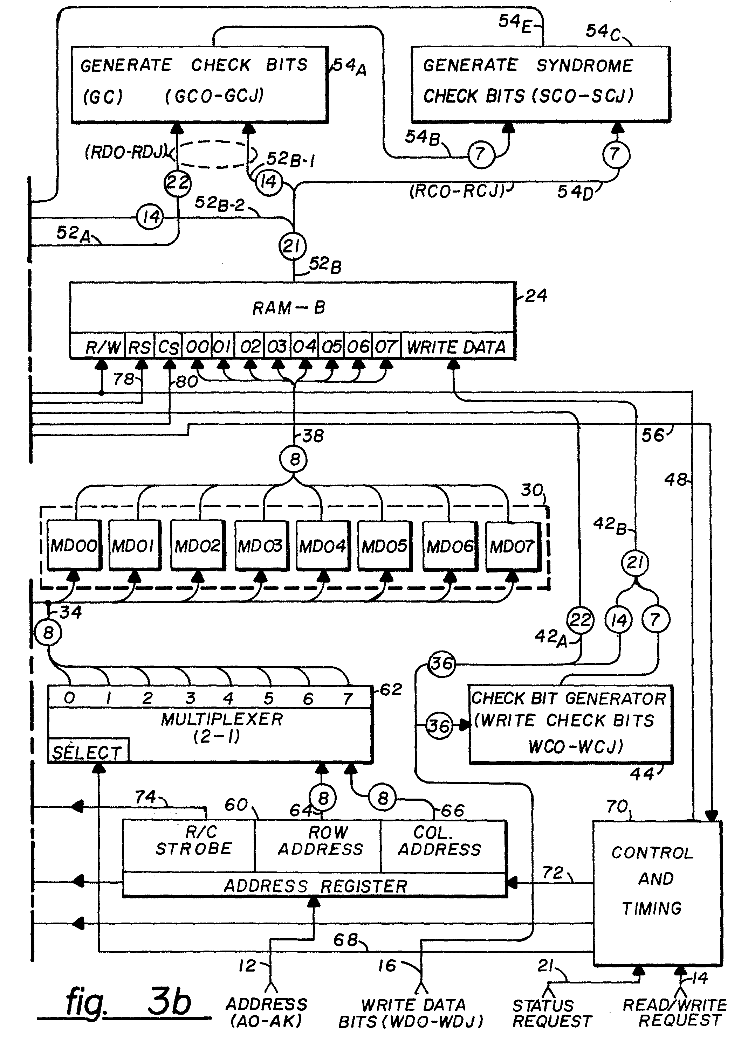

Figures 3a through Figure 3b, when arranged as shown in Figure 3, comprise a logic block diagram of the memory system of the present invention in which the write data bits and the associated check bits are divided into two portions for recording in two RAM devices. The same reference numerals are used where applicable.

The address comprises bits A0 to Ak and is directed on line 12 to the address register 60. For this embodiment, the address is translated into an 8-bit row address and an 8-bit column address. A 2-1 multiplexer 62 receives the row address bits on line 64 and the column address bits on line 66. The sixteen bits thus applied are selected for output on line 34 dependent upon the select signal received on line 68 from the control timing circuits 70. The control & timing circuits 70 receive the read/write

-8-

request on line 14 and the status request on line 21, and control the functioning of the memory accessing sequences. The control signals on line 72 control the transfer of the address from the address register 60 to the multiplexer 62, and also control the issuance of the R/C strobe signals on line 74 which are directed to the decoder 76.

For this embodiment, there are illustrated two RAM devices 22 and 24, indicating that the write data words and associated check bits are partitioned in half for recording. The operation of these RAM devices, which are commercially available, is well-known, and the internal functioning and operation will not be described in detail. The control & timing 70 provides R/W signals on line 48, which are directed to each of the RAM devices and selects whether a read or write operation is to take place. In response to the R/C strobe signals received on line 74 the decoder 76 provides a row strobe RS signal on line 78 to each of the RAM devices, thereby causing the row strobe function in each of the RAM devices. Similarly, the decoder 76 provides the column strobe CS signals on line 80 to each of the RAM devices, thereby causing the column strobe function to be enabled. Failure of any R/W driver, any RS or CS driver, or of any address driver will result in read data being in error.

The address drivers for the RAM A are shown enclosed in dashed block 28, and comprise eight memory address drivers designated MD0 through MD7. Each of these memory drivers receives the 8-bit address code for the row address or the column address on line 34 from the multiplexer 62. The output drive signals are applied on line 36 to the respective address input terminals of RAM A. Similarly, the address drivers for RAM B 24, enclosed within dashed block 30, receive the 8-bit address signals on line 34 and provide the drive signals on line 38 to the respective address terminals of RAM B 24.

The write data bits, from a 36-bit word in this embodiment, are designated WD0 through WDi, and are received on line 16. For recording purposes the write data bits are partitioned and 22 bits are transferred on line 42a to the write data input terminals of RAM A 22, and 14 bits are combined with the 7-bit array of check bits and transferred on line 42b to the write data input terminals of RAM 24. At the same time, the 36-bit write data word is directed to the check bit generator 44 which evaluates the state of the data bits and generates the 7-bit pattern of check bits that will be referred to as write check bits and will be designated WC0 through WCj. The example system for generation of check bits will be described below.

When data are to be read, the address specified on line 12 will designate the addressable locations in RAM A and RAM B for the two portions of the data word and check bits. The address multiplexing and R/C strobe decoding will occur as previously described. The twenty-two bits read from RAM A will be made available as output on line 52a. Simultaneously these twenty-two bits will be directed on line 52a to the generate check bit circuit 54a. The fourteen bits read from RAM B that make up a part of the read data are directed on line 52b-1 to the generate check bits circuit 54a. The read data bits are designated RD0 through RDi. The circuit that generates the check bits produces seven generate check bits designated GC0 through GCj on lines 54b to the generate syndrome check bits circuit 54c. Check bits read from RAM B are designated RC0 through RCj and are directed on lines 54d to the generate syndrome check bits circuit, which compares the check bits regenerated from the read data with the check bits generated during input and stored in the memory. Any differences will result in a syndrome pattern on line 54e that will be available for correcting the read data, if it contains a correctable error, before it is transferred, and for recording for further analysis. This will make it possible to determine whether the error occurred from malfunction of a memory driver, and to indicate which memory driver has failed. The read data bits are available on line 52b-2.

A detected error causes a signal to be sent on line 56 to control and timing 70, which results in control signals being generated on line 81a to cause the syndrome bits to be stored in the syndrome bit register 85, and on line 81B to cause the address to be captured in address latch register 87. The syndrome bits and the address of the detected error are stored for evaluation and are available for transmission to the processor in response to a status request received on line 21.

The read data bits are applied on lines 52a and 52b to error correction circuitry 89, along with syndrome bits on line 54e. This circuitry is of a type known in the art and is capable of correcting one-bit errors and detecting multiple-bit errors. A single bit error will be corrected, and the correct read data will be provided on line 50, along with a single bit error (SBE) signal on line 89-1. Data read correctly will be provided unaltered on line 50. If a more than one bit error is detected, the erroneous data is provided on line 50 and a multiple bit error (MBE) signal is provided on line 89-2. Other more powerful error detection/correction systems could be utilised with this invention.

The memory driver circuits shown enclosed within dashed block 28 and dashed block 30 are circuits well-known, and are often fabricated in conjunction with the RAM devices. It is not deemed necessary to describe a specific memory driver circuit since the subject invention is directed at detecting a failure of memory drivers irrespective of circuit type or specific electronic operation. This invention is particularly applicable to systems using integrated circuits, where access to the individual memory drivers may be difficult.

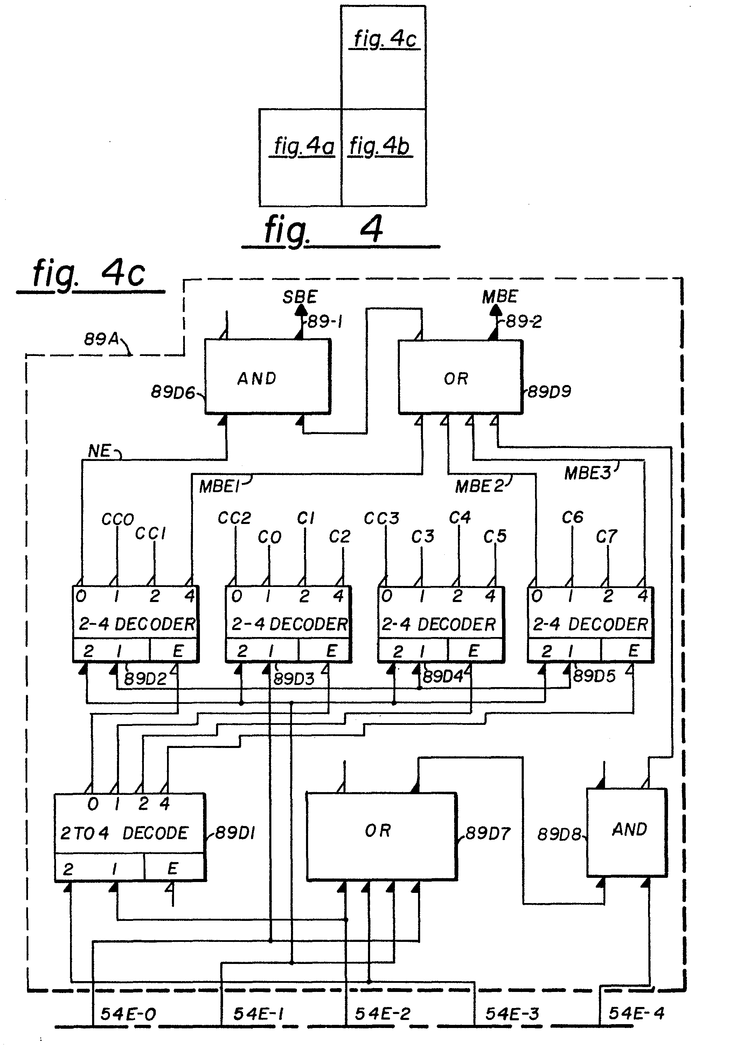

Figure 4a through Figure 4c, when arranged as shown in Figure 4, are a simplified logic block diagram of the improved memory accessing system having memory driver failure detection circuitry of the present invention, and illustrates the detailed operation on a reduced scale. In order to illustrate the specific circuit interrelationships while keeping the detailed logic diagrams clearly definitive of the inventive concepts, the memory system has been reduced to a 16-bit memory addressed by four address bits A0 through A3 collectively received on lines 34. RAM A is shown enclosed within dashed block 22 and comprises six 16-bit RAM

-11-

devices, each storing one bit of the write data and labelled 22-0 through 22-5. Similarly, RAM B is shown enclosed within dashed block 24 and utilises two 16-bit RAM devices, labelled 24-6 and 24-7, for storing two of the 8-bit digits of the write data words. RAM B also stores the write check bits in bit-storing RAM devices labelled 24-C0, 24-C1, 24-C2, 24-C3, and 24-CT.

The memory drivers for RAM A are shown enclosed in dashed block 28. Each receives one address bit, and each drives the like-ordered address bits of each of the RAM devices in RAM A. The memory driver circuits associated with RAM B are shown enclosed in dashed block 34, and each is driven by one of the address bits, and drives all like ordered address drive positions of the RAM devices in RAM B. The four address bits A0 through A3 can address a total of sixteen addressable locations for the simplified memory system described.

The write data for this example is an 8-bit word, with the bits designated WD0 through WD7. Write data bits WD0 through WD5 are directed over lines referenced collectively as cable 42a to respective RAM devices in RAM A. Write data bits WD6 and WD7 are directed on lines 90 and 92 to RAM 6, labelled 24-6 and RAM 7 labelled 24-7 in RAM B respectively.

The check bit generator circuitry is shown enclosed within dashed block 44 and comprises five exclusive-OR circuits (XOR) of a type available commercially. With reference to Figure 2, it can be seen which bit positions of the write data are used for computing for each of the individual check bits. Each of the XOR circuits labelled 44-0 through 44-4, has its input terminals labelled to correspond to the associated write data bits. The generated check bits are defined by the following equations:-

$$WC0 = WD0 \oplus WD2 \oplus WD3 \oplus WD5 \oplus WD6 \qquad \text{(EQUATION 1)}$$
$$WC1 = WD1 \oplus WD2 \oplus WD4 \oplus WD5 \oplus WD7 \qquad \text{(EQUATION 2)}$$
$$WC2 = WD0 \oplus WD1 \oplus WD2 \oplus WD6 \oplus WD7 \qquad \text{(EQUATION 3)}$$
$$WC3 = WD3 \oplus WD4 \oplus WD5 \oplus WD6 \oplus WD7 \qquad \text{(EQUATION 4)}$$
$$WCT = WD0 \oplus WD1 \oplus WD3 \oplus WD4 \qquad \text{(EQUATION 5)}$$

WC0 is directed to RAM C0 on line 94, WC1 is directed to RAM C1 on line 96, WC2 is directed to RAM C2 on line 98, WC3 is directed to RAM C3 on line 100, and WCT is directed to RAM CT on line 102, and collectively they represent the array of write check bits recorded with the data word.

The generate check bit circuitry is shown enclosed in dashed block 54a, and comprises a plurality of exclusive-OR circuits labelled 54a-0 through 54a-4. These XOR circuits receive data bits read from the memory, and function in the same way as those in the dashed block 44. The generated check bits are identified as GC0, GC1, GC2, GC3, and GCT. the read data bits are designated RD0 through RD7. The numerical designation at the input of XOR circuits 54a-0 through 54a-4 indicate the read data bit position. the equations for the generation of the generate check bits are shown below:-

$$GC0 = RD0 \oplus RD2 \oplus RD3 \oplus RD5 \oplus RD6 \qquad \text{(EQUATION 6)}$$
$$GC1 = RD1 \oplus RD2 \oplus RD4 \oplus RD5 \oplus RD7 \qquad \text{(EQUATION 7)}$$
$$GC2 = RD0 \oplus RD1 \oplus RD2 \oplus RD6 \oplus RD7 \qquad \text{(EQUATION 8)}$$
$$GC3 = RD3 \oplus RD4 \oplus RD5 \oplus RD6 \oplus RD7 \qquad \text{(EQUATION 9)}$$
$$GCT = RD0 \oplus RD1 \oplus RD3 \oplus RD4 \qquad \text{(EQUATION 10)}$$

If there is no error in recording or reading, the generate check bits provided by circuitry 54a should be identical with the write check bits written as determined by circuitry 44. Any error will result in a difference between the generate check bits and the write check bits.

The comparison is accomplished by the generate syndrome check bits circuitry shown enclosed within dashed block 54c, which comprises a plurality of exclusive-OR circuits 54c-0 through 54c-4. Each of the XOR circuits compares a generate check bit with the corresponding read check bit. RC0 is compared with the generate check bit 0 CG0 by XOR 54c-0. If these two check bits are identical the syndrome check bit SC0 on line 54e-0 will indicate identity. The same holds for each of the check bits C1, C2, C3 and CT on lines 54e-1 through 54e-4. The equations for the syndrome check bits are:-

$$SC0 = GC0 \oplus RC0 \qquad \text{(EQUATION 11)}$$
$$SC1 = GC1 \oplus RC1 \qquad \text{(EQUATION 12)}$$
$$SC2 = GC2 \oplus RC2 \qquad \text{(EQUATION 13)}$$
$$SC3 = GC3 \oplus RC3 \qquad \text{(EQUATION 14)}$$
$$SCT = RD0 \oplus RD1 \oplus RD2 \oplus RD3 \qquad \text{(EQUATION 15)}$$
$$\oplus RD4 \oplus RD5 \oplus RD6 \oplus RD7$$
$$\oplus RC0 \oplus RC1 \oplus RC2 \oplus RC3 \oplus RCT$$

The syndrome check bits are utilised to notify the MCU, either that the read data is accurate, or that a read error has occurred. If an error condition has been detected, the normal operation is to capture the address and store the syndrome bits, and to notify the processor accordingly. For these error conditions, the address and the syndrome check bits are made available for recording in response to a status request and will provide indication of the driver that is malfunctioning.

The portion of the error correction circuitry 89 that translates the syndrome bits to provide the SBE and MBE signals is shown within the dashed block 89A. The actual error correction circuitry is not shown, since it does not aid in an understanding of the invention and can readily be understood without detailed illustration. The syndrome check bits are received on lines 54e-4. The translation of SC0 through SC3 is accomplished by a rank of 2-4 decode circuits, which can be selected from circuits available commercially. SC2 and SC3 are applied to decode circuit 89B-1. This circuit operates, when enabled, to provide an output signal on one of the four available output terminals determined by the state of the two input signals. The closed arrow indicates a high signal, or a logical one, while an open arrow indicates a low signal, or a logical zero. The input signals can be considered as a count, with only one of the output terminals going low, depending upon the input count. For example, if neither SC2 or SC3 is a high signal, there will be a low enabling output signal on the 0 output terminal from circuit 89D-1 thereby enabling decode circuit 89D-2. A similar translation follows for the four possible combinations of SC2 and SC3 for respectively enabling the other decode circuits 89D-3, 89D-4 and 89D-5. SC0 and SC1 are applied as the count signals to the four decode circuits, and depending upon which circuit is enabled, will result in translation on one of the sets of four possible output lines. Again, by way of example, if SC0 and SC1 are both zero, and SC2 and SC3 are zero, decode circuit 89D-1 will enable decode circuit 89D-2, and the zero input on its input terminals will result in a no error output signal on line NE. If SC0 is one and SC1, SC2, and SC3 are zero, decode circuit 89D-2 will provide an active signal on line CC0 indicating that check bit zero should be corrected. Each of the output lines is labelled with the function of the decoded signal. For the example just described, where SC0 is one, the 0 output terminal of decode circuit 89D-2 will provide a high signal on the NE line to AND circuit 89D-6 thereby satisfying one of the input conditions for identifying the single bit error condition. All other combinations of SC0 through SC3 can be traced through the logic for determining the combination of output signals from the decode circuits. SC0 through SC3 are also applied to OR circuit 89D-7. This circuit provides the OR function of high signals such that if any one or more of the SC0 through SC3 signals is high, there will be a high output signal to AND circuit 89D-8. This AND circuit also receives SCT signal and if high, in combination with a high signal from OR 89D-7, will indicate a multiple bit error and will provide a low signal to OR circuit 89D-9. Thus it can be seen that the occurrence of SCT and any one of the other signals SC0 through SC3 being high will result in the MBE signal being provided on line 89-2. The decoder circuits 89D-2 through 89D-5 also provide input signals to OR 89D-9, each indicative the occurrence of at least two high signals in

combination from SC0 through SC3. Therefore, any combination of high signals thus translated will also result in the MBE signal being provided on line 89-2. If no multiple bit error condition is detected, OR circuit 89D-9 will provide a high input signal to AND 89D-6, thereby enabling it to be responsive to the presence or absence of a high signal on the NE line previously described for purposes of determining whether or not there is a single bit error. As previously mentioned, the correction enable signals go to circuitry, not shown, for performing the single bit correction if possible. If no error is detected, the read data bits are available for transmission directly. If a single bit error is detected, the data bit or check bit determined to be in error can be corrected and transmitted along with the signal indicating that an error has occurred, but has been corrected so the data is good, as indicated by the SBE signal. When a multiple bit error is detected, no correction can take place for this embodiment, and the read data are available for transmission or being discarded, as may be determined in the specific system. The MBE signal is available to notify the processor that an error has occurred, and that the data is not useful. As previously mentioned, other embodiments can utilise other error detection correction systems which may provide for multiple bit detection and correction.

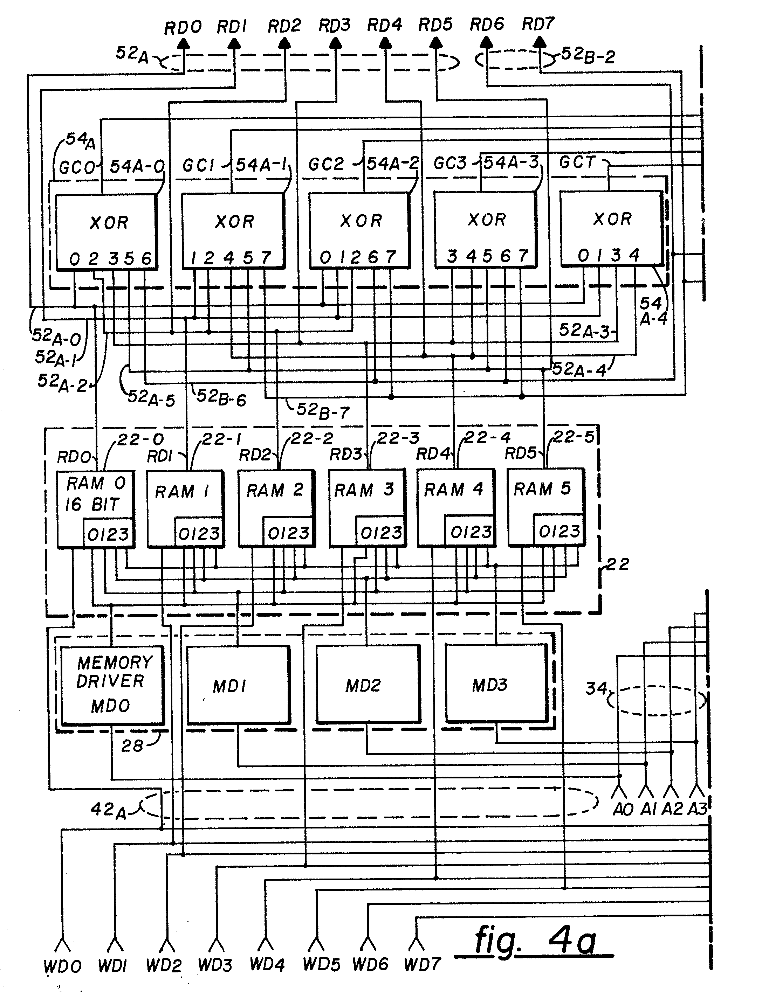

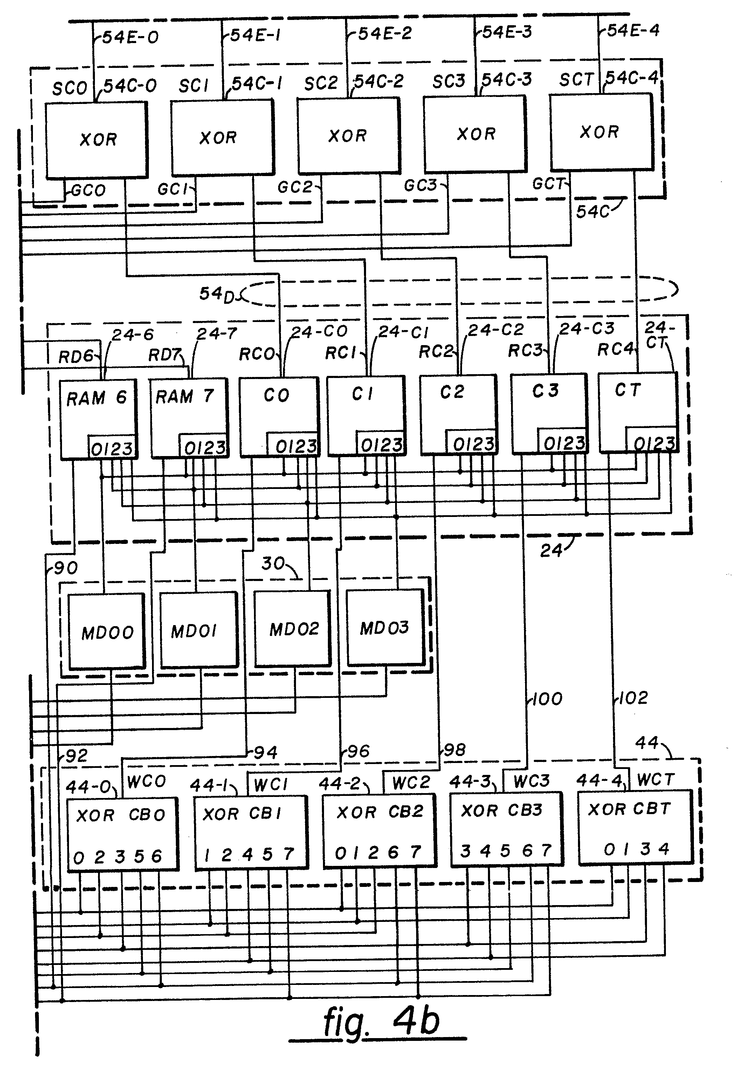

Figure 5 is a syndrome map and illustrates the identification of the memory malfunction during reading. It can be seen that the indication of "no error" occurs only when the syndrome check bits SC0 through SC3 are all zero. Any other condition indicates an error condition. The dot indication represents a multiple error, which determines that memory drivers have failed, but does not specifically isolate the failing driver, and correction cannot be accomplished (for this embodiment). The interpretation of Figure 5 illustrates that where all syndrome bits are zero, there is no error. The condition of SCT of zero and any SC0-SC3 non-zero is uncorrectable. An SCT of either one or zero in combination with any undefined error (.) renders the read data uncorrectable. When SCT is one and all SC0-SC3 are zero, there is a single-bit error only. Finally, when SCT is one and any SC0-SC3 yields a defined syndrome, there is a single-bit error, which can be corrected.

It will be apparent that different combinations and numbers of write data bits and check bits can be used in the invention, and that the bits to be written can be partitioned in various ways between two or more separately addressable memory devices.

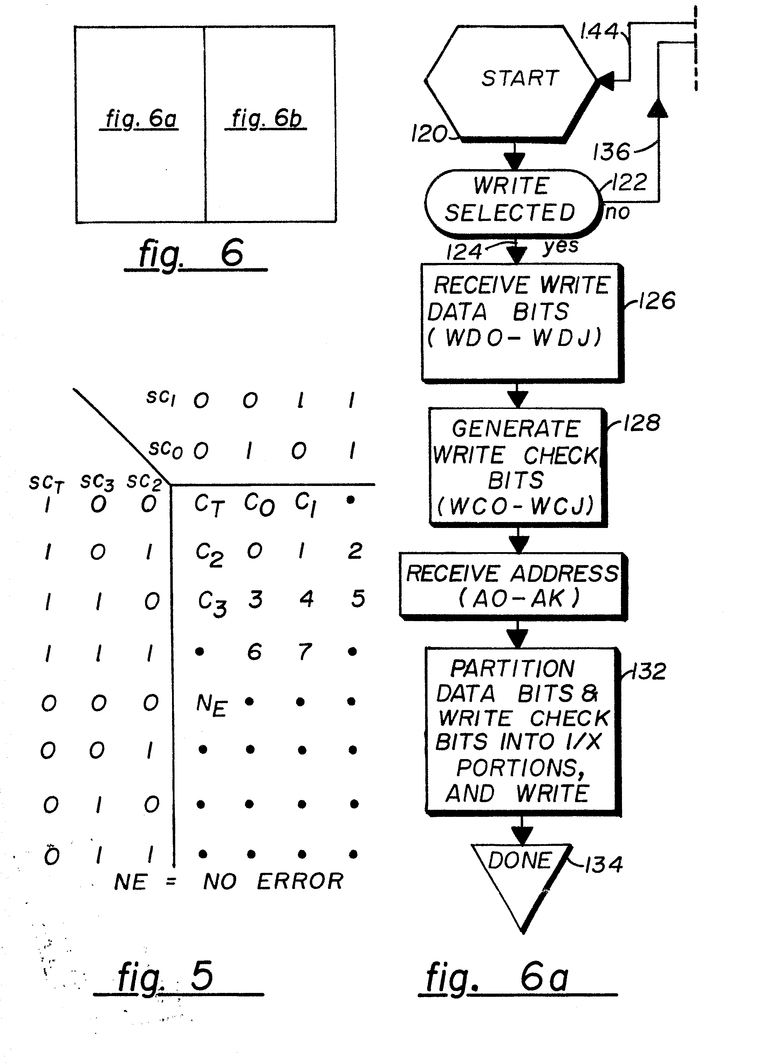

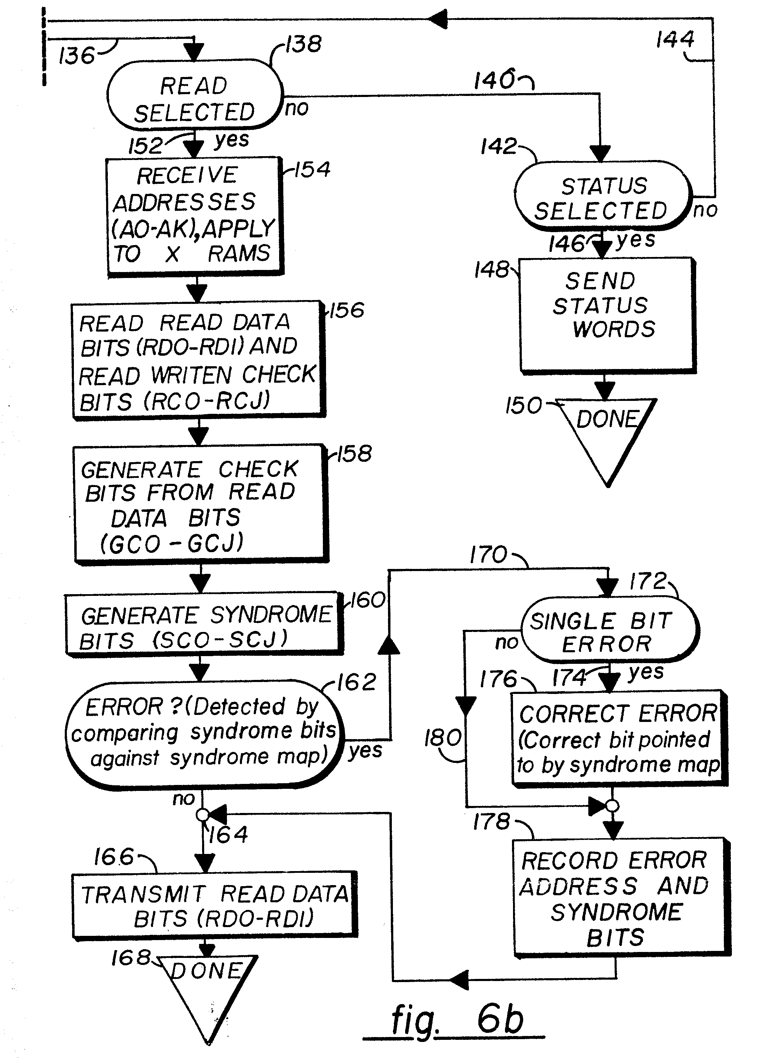

Figure 6 is a flow diagram illustrating the operation of the invention. The oval elements indicate decisions being made, and the rectangular elements indicate steps being taken. The arrowheads indicate the direction of flow. At the start 120, the determination is made whether or not a write operation is selected, as indicated by decision element 122. If a write is selected, the "yes" path 124 is taken and the write data bits WD0 through WDi are received, as indicated by element 126. This is followed by the step of generating write check bits WC0 through WCj as indicated by block 128. The designated address bits A0 through Ak are then received. The combination of the write date bits and the write check bits are partitioned into the portions written in respective memory devices at the address specified, as indicated by block 132. Upon completion of the write, the memory access is done (134). At the outset, if a write has not been selected, the "no" path 136 is taken and it is determined whether or not there is a read selection made, as indicated by decision element 138. If no read is selected, the "no" path 140 is taken, and a decision is made as to whether a status request is present, as indicated by decision element 142. If no status request is present, the "no" path 144 is taken. If a status request is present, "yes" path 146 is taken and the status information, including the captured address and syndrome bits, are transferred, as indicated by block 148. The sequence is then done (150). If a read is selected the "yes" path 152 is taken and the address bits A0 to Ak are received and applied to all RAM devices, as indicated by the block labelled 154. The read data bits RD0 through RDi are read along with the read check bits RC0 through RCj as indicated by block 156. The read data bits are utilised to generate check bits GC0 through GCj as indicated by block 158. Syndrome bits SC0-SCj are generated from the generated check bits and the read check bits, as indicated by block 160. The read check bits are them compared with the generated check bits, as indicated by decision element 162, to determine if an error has occurred. If no error is found, the "no" path 164 is taken, and the read data bits are transmitted, as indicated by block 166, and the sequence is done (168). If a difference is detected, thereby indicating a detected data error, and possibly a memory driver error, the "yes" path 170 is taken. The error is tested for single-bit or multiple-bit error conditions, as indicated by decision block 172, and if a single-bit error exists, the "yes" path 174, is taken. The error is corrected, as indicated by block 176. The address is captured and the syndrome bits are recorded, as indicated by block 178, and the corrected data and error indication is transmitted (block 166). If a multiple-bit error is detected, "no" path 180 is taken and error address and syndrome are recorded. At this point the system may either generate an interrupt, or may transmit the data and set a toggle to warn the operating system that an error has occurred. In either case, the sequence is completed.

By applying the principles previously described to various combinations of write data bit configurations with associated check bits, it can be verified that a failure of a memory driver which would direct an address to a wrong location would result in the failure of the comparison to the generated check bits, and would indicate the error. It will be noted, that a memory driver might fail completely, in which event the write data may be recorded partially in a wrong location. When read, without further intervention by access to the erroneous address, the data will actually check correctly. This follows from the fact that the failed memory driver during the read will direct access to the erroneous address. However, a subsequent recording directed to the erroneous address will overwrite the data that was improperly stored at that address, hence when read out occurs for the erroneously written data, there will be a failure of comparison between check bits, and the error will be isolated. This system protects the integrity of the data transmitted to the data processor, in that even if erroneously recorded in a wrong address and erroneously accessed, the check that determines that the read data is correct will ensure that the only correct data is transmitted to the processor.

-18-

The evaluation of the record of recorded error addresses and syndrome bits will point to particular failing drivers by the pattern of bits found in error. The error address history will yield a pattern where an address bit is always set or cleared, and will direct attention to the address drivers for that address.

0080354

-19-

## Claims

1.    A computer memory checking system including error detecting and correcting means for generating check digits and storing them together with the data digits, for generating check digits on reading out the stored data, for comparing the digits so generated with the previously stored check digits, and thereby detecting and correcting single digit errors, and detecting multiple digit errors, characterised in that the data digits (WD0 to WD7) and check digits (C0 to C3, CT) of words to be stored are partitioned, each part is stored in a separate random access memory (22, 24, 26), and during each memory accessing cycle the address of a word is applied simultaneously to the memory drivers (28, 30, 32) for each of the random access memories to access all the portions of the word.

2.    A computer memory checking system according to claim 1 further including means for generating (54C), and for storing (85), syndrome digits whose pattern indicates the types of error which have been detected.

3.    A computer memory checking system according to claim 1 or claim 2 further including means (87) for recording the address from which a word containing an error has been accessed.

fig. 1

| | WDO | WDI | WD2 | WD3 | WD4 | WD5 | WD6 | WD7 | CO | CI | C2 | C3 | CT |
|-----|-----|-----|-----|-----|-----|-----|-----|-----|-----|-----|-----|-----|-----|
| CO | X | | X | X | | X | X | | X | | | | |
| CI | | X | X | | X | X | | X | | X | | | |
| C2 | X | X | X | | | | X | X | | | X | | |
| C3 | | | | X | X | X | X | X | | | | X | |
| CT | X | X | | | X | X | | | | | | | X |

fig. 2

AVAILABLE TO PROCESSOR

READ DATA    SINGLE BIT
ERROR (SBE)

MULTIPLE BIT
ERROR (MBE)

*50*    *89*    *89-1*    *89-2*

ERROR CORRECTION CIRCUITRY

*54E*

㉒    ⑭    *52B-2*    *56*

*52A*    *52A*

RAM—A    *22*

| R/W | RS | CS | 0 | 1 | 2 | 3 | 4 | 5 | 6 | 7 | WRITE DATA |

*48*    *42A*

*36*

⑧

| MD0 | MD1 | MD2 | MD3 | MD4 | MD5 | MD6 | MD7 |

*28*

AVAILABLE TO PROCESSOR

*85*    *87*    *76*    *80*    *78*

| SYNDROME BIT REGISTER | ADDRESS LATCH REGISTER | DECODER |

*81A*    *81B*    *74*

| fig. 3a | fig. 3b |

_fig. 3_    _fig. 3a_

fig. 3b

fig. 4c

fig. 4a | fig.4b

fig. 4

*fig. 4c*

fig. 4a

6/8

fig. 4b

fig. 6a | fig. 6b

## fig. 6

| $sc_1$ | | 0 | 0 | 1 | 1 |
|---|---|---|---|---|---|
| | $sc_0$ | 0 | 1 | 0 | 1 |

| $sc_T$ | $sc_3$ | $sc_2$ | | | | |
|---|---|---|---|---|---|---|
| 1 | 0 | 0 | $C_T$ | $C_O$ | $C_1$ | • |
| 1 | 0 | 1 | $C_2$ | 0 | 1 | 2 |
| 1 | 1 | 0 | $C_3$ | 3 | 4 | 5 |
| 1 | 1 | 1 | • | 6 | 7 | • |
| 0 | 0 | 0 | $N_E$ | • | • | • |
| 0 | 0 | 1 | | • | • | • |
| 0 | 1 | 0 | | • | • | • |
| 0 | 1 | 1 | | • | • | • |

NE = NO ERROR

## fig. 5

START 120

WRITE SELECTED 122

144

136

no

124 yes

RECEIVE WRITE DATA BITS (WDO-WDJ) 126

GENERATE WRITE CHECK BITS (WCO-WCJ) 128

RECEIVE ADDRESS (AO-AK)

PARTITION DATA BITS & WRITE CHECK BITS INTO I/X PORTIONS, AND WRITE 132

DONE 134

## fig. 6a

fig. 6b